# EUROPEAN PATENT APPLICATION

(11) **EP 4 207 032 A1**
(43) Date of publication of application: **05.07.2023**
(21) Application number: 22210684.1
(22) Date of filing: 30.11.2022
(51) Int. Cl.: G06Q 30/0251

(54) **METHODS, DEVICES, AND SYSTEMS FOR DYNAMIC TARGETED CONTENT PROCESSING**

(30) Priority: 31.12.2021 US 202117566891
(71) Applicant: Synamedia Limited, Staines Upon Thames, Middlesex TW18 4EX (GB)
(72) Inventor: AGMON, Alon, Raanana (IL); DEVIR, Michal, Irit, Haifa (IL)
(74) Representative: IK-IP LTD

(57) **Abstract**

Techniques for dynamic targeted content processing performed at a server including processor(s) and a non-transitory memory are described herein. In some embodiments, the server obtains user content similarity scores between media content items and users and obtains content similarity scores between a targeted content item and the media content items by projecting the targeted content item and the media content items onto a content vector space. The server also identifies a list of media content items on the content vector space based on the content similarity scores, e.g., a respective media content item in the list has a respective content similarity score satisfying a first criterion. The server additionally locates, for the list of media content items, a set of users among the users based on the user content similarity score, e.g., a respective user in the set has a respective user content similarity score satisfying one or more second criteria.

## Description

### TECHNICAL FIELD

The present disclosure relates generally to multimedia content delivery and, more specifically, to targeted content processing in multimedia content delivery.

### BACKGROUND

Previously existing advertising data management platforms typically identify targeted audiences based on a set of pre-defined categories, e.g., age, gender, hobbies, etc. The constraints imposed by fitting users into pre-defined categories can lead to sub-optimal results. For example, various hobbies can be classified into one pre-defined category such as food and another pre-defined category such as traveling. Using such pre-defined categories, it is difficult for advertisers to profile an audience described as "young foodies with kids" or "news fans who like traveling". Relying on inaccurate targeted audience profiling and classification, the targeted content provided by the advertisers to such audiences may be irrelevant and less effective.

### BRIEF DESCRIPTION OF THE DRAWINGS

So that the present disclosure can be understood by those of ordinary skill in the art, a more detailed description may be had by reference to aspects of some illustrative embodiments, some of which are shown in the accompanying drawings.
Figure 1 is a block diagram of an exemplary multimedia content delivery system including a targeted content analyzer for dynamic targeted content processing, in accordance with some embodiments;
Figure 2 is a diagram illustrating the exemplary targeted content analyzer deriving consumption patterns during preparation stage, in accordance with some embodiments;
Figure 3 is a diagram illustrating the exemplary targeted content analyzer identifying content similarities during preparation stage, in accordance with some embodiments;
Figure 4 is a diagram illustrating the exemplary targeted content analyzer similarities between users and content during preparation stage, in accordance with some embodiments;
Figure 5 is a diagram illustrating the exemplary targeted content analyzer identifying a list of media content items for targeted content during targeted content processing stage, in accordance with some embodiments;
Figure 6 is a diagram illustrating the exemplary targeted content analyzer identifying targeted audience during targeted content processing stage, in accordance with some embodiments;
Figures 7A and 7B are flowcharts illustrating a method of dynamic targeted content processing, in accordance with some embodiments; and
Figure 8 is a block diagram of a computing device for dynamic targeted content processing, in accordance with some embodiments.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DESCRIPTION OF EXAMPLE EMBODIMENTS

Numerous details are described in order to provide a thorough understanding of the example embodiments shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example embodiments described herein.

### OVERVIEWs

A dynamic targeted content processing method described herein solves the aforementioned profiling issues by allowing free formatted and flexible descriptions of the targeted audiences. For example, to target news fans who like traveling, the advertiser can describe what the users like to view using free formatted text such as "current affairs", "news", "traveling", "journey", etc., and/or images taken from an advertisement. The dynamic targeted content processing method in accordance with some embodiments processes the free formatted text description and/or images and locates similar content and targeted audiences. As such, the method described herein enhances the advertiser's ability to accurately target the desired audiences based on a flexible description with minimal constraints and without dependency upon any pre-defined categories.

In accordance with various embodiments, a dynamic targeted content processing method is performed at a server that includes one or more processors and a non-transitory memory. The method includes obtaining user content similarity scores between media content items and users. The method further includes obtaining content similarity scores between a targeted content item and the media content items by projecting the targeted content item and the media content items onto a content vector space based on targeted content characteristics of the targeted content item. The method also includes identifying a list of media content items on the content vector space based on the content similarity scores, where a respective media content item in the list of media content items has a respective content similarity score between the targeted content item and the respective media content item satisfying a first criterion. The method additionally includes locating, for the list of media content items, a set of users among the users based on the user content similarity score, where a respective user in the set of users has a respective user content similarity score between the respective media content item and the respective user satisfying one or more second criteria.

### EXAMPLE EMBODIMENTS

Methods, devices, and systems in accordance with various embodiments described herein include a server that identifies targeted audiences and related media content items for outputting targeted content based on characteristics of media content items, consumption patterns, and characteristics of the targeted content. During the preparation stage, the headend identifies the consumption patterns, similarities among media content items, and similarities among users and the media content items using natural language processing techniques on metadata and/or using image processing techniques on images. During a targeted content processing stage, instead of fitting the audience into a set of pre-defined categories, the system allows the advertisers to describe the targeted content using free text and/or images. Based on the similarities between the targeted content, the media content items, and the users, the server identifies a targeted audience and related media content items for outputting the targeted content, thus increasing the flexibility and accuracy of targeted content delivery.

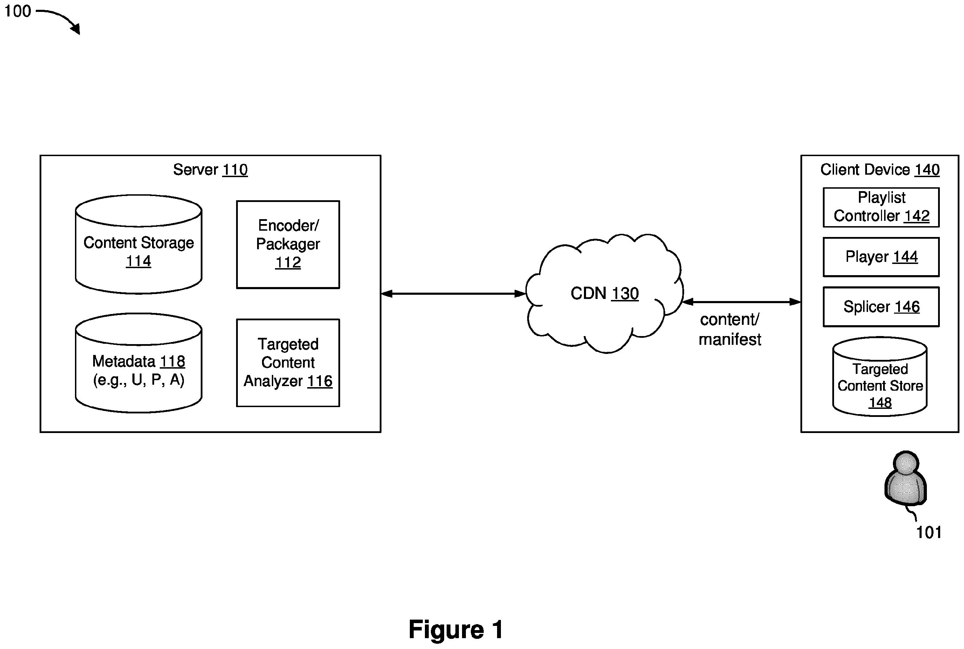

Reference is now made to Figure 1, which is a block diagram of an exemplary multimedia content delivery system 100 in accordance with some embodiments. In some embodiments, the multimedia content delivery system 100 includes a server 110 (e.g., a headend), a content delivery network (CDN) 130, and a client device 140. Although a single server 110, a single CDN 130, and a single client device 140 are illustrated in Figure 1, the system 100 can include one or more servers 110 as well as one or more client devices 140, and can include zero, one, or more CDNs 130. For instance, the CDN(s) 130 can be included in the exemplary system 100 for scalability. As such, the server 110 provides multimedia content to the client device(s) 140, optionally via the CDN(s) 130. For the sake of simplicity, the subject matter will be described hereinafter for the most part with reference to a single server 110, a single client device 140, and a single CDN 130.

In some embodiments, the server 110 includes an encoder and packager 112 for encoding multimedia content from a content storage 114 (e.g., live or video-on-demand (VOD) content) and packaging the encoded content to a suitable format for streaming to the client device 140. As used herein, the multimedia content (also referred to hereinafter as "media content", "media content item(s)", "media asset", or "content") provided by the server 110 and received by the client device 140 can include any multimedia data, such as visual data, audio data, and/or text, etc. Further, the content prepared by the server 110 and received by the client device 140 can have a variety of encoding and/or packaging formats. For example, the encoder and packager 112 can encode the content from the content storage 114 into any suitable format, including, but not limited to, advanced video encoding (AVC), versatile video coding (VVC), high efficiency video coding (HEVC), AOMedia video 1 (AV1), VP9, MPEG-2, MPEG-4, MP3, AC-3, etc. In another example, the encoder and packager 112 can package the encoded content according to Dynamic Adaptive Streaming over HTTP (DASH), HTTP Live Streaming (HLS), Smooth Streaming, or HTTP Dynamic Streaming (HDS) format and construct manifest in accordance with HLS or DASH.

In some embodiments, the server 110 also includes a targeted content analyzer 116 that uses metadata 118 associated with the content and/or users (e.g., metadata for users, programs, and/or advertisements) as well as pictures of the content to prepare for targeted content processing. In some embodiments, the metadata 118 about a user (denoted as U) include the consumption history of the user, e.g., a list of TV programs watched, the time, duration, and/or frequency of content consumption, etc. In some embodiments, the metadata 118 about a media content item (e.g., denoted as P) include a synopsis, a trailer, image(s), etc. In some embodiments, the metadata 118 about a targeted content item (denoted as A) include descriptions provided by advertisers, e.g., in free text, and/or images taken from the targeted content item.

In some embodiments, the targeted content analyzer 116 further identifies similarities among the user, the media content items, and the targeted content for generating a list of targeted audiences and a list of relevant media content items for each targeted content. For example, the targeted content analyzer 116 can identify a list of users for providing an advertisement and produce a list of relevant media content items to insert the advertisement and/or display the advertisement around the same time. As used herein, "targeted audience" or "intended audience" refers to a group of users identified as the targets or recipients for particular content, such as an advertisement, a message, an offer for purchase, etc. The users in the group are likely to want the products and/or services referenced in the particular content. The particular content, referred to hereinafter as the "targeted content" is thus the content created and tailored for the targeted audience with the goal of driving a specific response from the targeted audience. Advertisements are one type of targeted content. When an advertisement is shown to a group of users that is identified as the targeted audience of the advertisement, the group of users would most likely find the advertisement appealing and the advertisement is likely to prompt the group of users to take actions such as making a purchase and/or completing a subscription.

In Figure 1, on the receiving end, in some embodiments, the client device 140 includes a playlist controller 142 for requesting and obtaining playlist and/or manifest files for the streaming content and a player 144 for playing the content (including both targeted content and non-targeted content) from the server 110 (e.g., received via the CDN 130) according to the playlist and/or the manifest. The client device 140 can be a TV, a set-top-box, or a computing device with a processor and a non-transitory memory. In the case of a user 101 being identified as the targeted audience, the client device 140 receives the targeted content from the server (e.g., via the CDN 130) and stores the targeted content in the targeted content store 148 for preparation of playing the targeted content to the user 101 in accordance with some embodiments. In some embodiments, as will be described in further detail below, the targeted content is played by the player 144 according to the schedule determined by the server 110, e.g., around the same time similar media content items are played. Further, in some embodiments, the client device 140 also includes a splicer 146 for splicing media content received from the server 110 and inserting the targeted content from the targeted content store 148 into the media content before playing the media content (e.g., by the player 144) to the user 101.

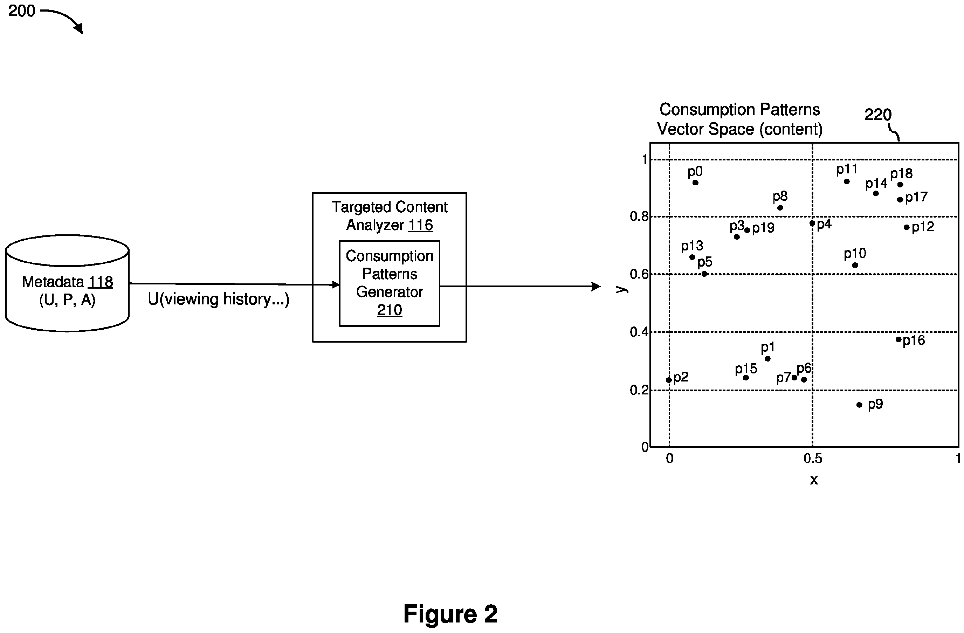

It should be noted that one or more components and/or functions of the server 110 and/or the client device 140 may be distributed and/or re-arranged. For example, the content storage 114 and/or the encoder and packager 112 can be on a different and distinct server from the server hosting targeted content analyzer 116. As such, the server 110 and/or the client device 140 in the exemplary content delivery system 100 can include more, less, and/or different elements than shown in Figure 1. For instance, subcomponents in the targeted content analyzer 116 are described in further detail below with reference to Figures 2-6. Each of the components in the content delivery system 100 can include appropriate hardware, software, and/or firmware to perform the operations attributed to the element herein. Operation(s) attributed to an element in the content delivery system 100 herein should not be considered binding and in some embodiments, other element(s) in the exemplary system 100 may additionally or alternatively perform such operation(s).

Figure 2 is a diagram 200 illustrating the targeted content analyzer 116 deriving consumption patterns in accordance with some embodiments. In some embodiments, the targeted content analyzer 116 includes a consumption patterns generator 210. During the preparation stage, the consumption patterns generator 210 identifies similarities between media content items based on the metadata 118 related to the users, e.g., consumption patterns. For instance, two TV programs are considered similar when users who typically watch or purchase one of the programs would watch or purchase the other program as well. In some embodiments, the consumption patterns generator 210 derives feature vectors from the consumption history and projects the feature vectors onto a consumption patterns vector 220 (e.g., a latent vector space). Further, in some embodiments, the consumption patterns generator 210 determines the content similarities between media content items based on the distances between the feature vectors representing the media content items on the consumption patterns vector space 220. In some embodiments, to project the media content items onto the consumption patterns vector space 220, the consumption patterns generator 210 provides the consumption history of each user as a Document to Word2Vec. Other suitable natural language processing (NLP) techniques, e.g., bag-of-words model, continuous skip-gram, latent semantic analysis (LSA), and/or latent dirichlet allocation (LDA), etc., can be used in place of or in conjunction with Word2Vec.

In Figure 2, twenty dots representing feature vectors extracted from twenty media content items are labeled as p0 through p19 and projected onto the exemplary consumption patterns vector space 220. On the consumption patterns vector space 220, media content item p7 is closer in distance to media content item p6 than media content p0, representing a lower similarity score for p6 and p7 than the similarity score for p7 and p0, e.g., users are more likely to consume media content items p7 and p6 together and are less likely to consume media content items p7 and p0 together.

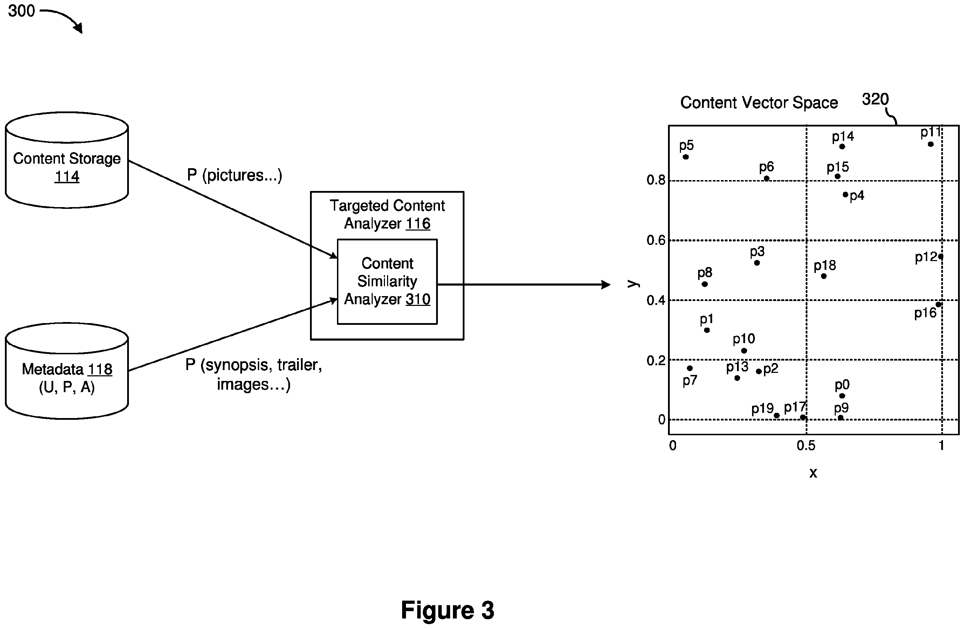

Figure 3 is a diagram 300 illustrating the targeted content analyzer 116 identifying content similarities in accordance with some embodiments. In some embodiments, the targeted content analyzer 116 includes a content similarity analyzer 310. During the preparation stage, the content similarity analyzer 310 identifies similarities between media content items based on the metadata 118 related to the media content items and/or pictures from the media content items, such as synopsis, trailer, and/or images, etc. Two media content items are considered similar when the synopsis, the trailers, and/or the images associated with the media content items are similar.

To identify the similarities, in some embodiments, the content similarity analyzer 310 projects the media content items onto a latent vector space 320 based on characteristics of the media content items from the metadata 118 and/or the content storage 114 and determines the similarities based on the distance between vectors representing the media content items. In some embodiments, the content similarity analyzer 310 provides metadata 118 (e.g., synopsis) to Word2Vec for feature extraction. In some other embodiments, the content similarity analyzer 310 uses autoencoder on the images associated with the media content items (e.g., trailers, previews, a movie scene, etc.) from the metadata store 118 and/or the content storage 114 to generate feature vectors and projects the feature vectors representing the media content items onto the latent vector space 320. Other representation learning for text and/or images feature extraction can be used in place of or in conjunction with Word2Vec and/or autoencoder, including, but not limited to supervised learning, unsupervised learning, and/or multilayer deep learning methods.

In Figure 3, twenty dots representing feature vectors extracted from twenty media content items are labeled as p0 through p19 and projected onto the exemplary content vector space 320. On the content vector space 320, media content item p0 is closer in distance to media content item p9 than media content item p1, reflecting a lower content similarity score for p0 and p9 than the content similarity score for p0 and p1, e.g., based on the synopsis, trailer and/or image(s) of the media content items, media content item p0 is more similar to p9 and less similar to p1.

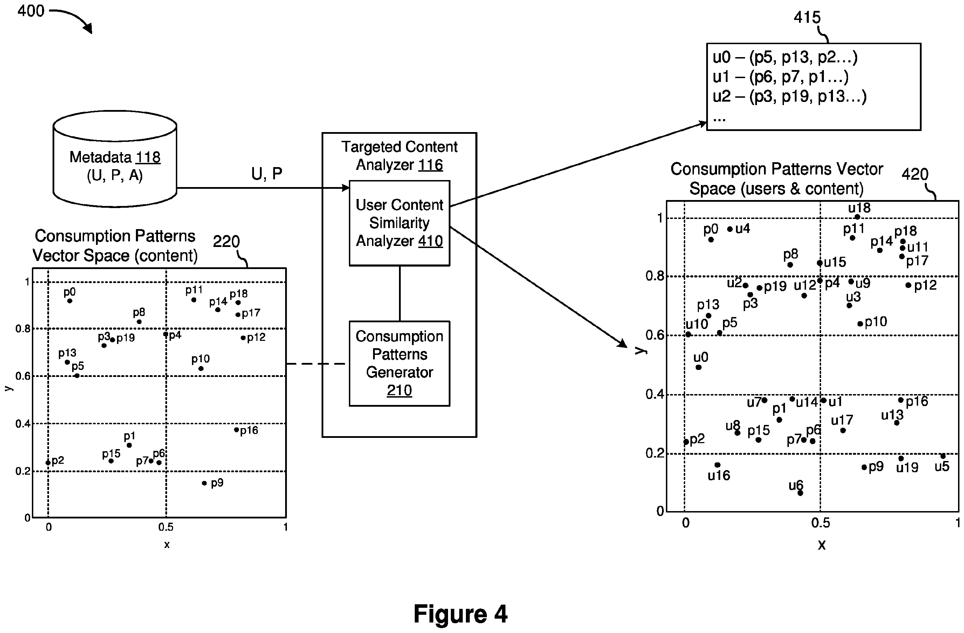

Figure 4 is a diagram 400 illustrating the targeted content analyzer 116 identifying similarities between users and content in accordance with some embodiments. In some embodiments, the targeted content analyzer 116 includes a user content similarity analyzer 410 coupled to the consumption patterns generator 210. In some embodiments, the user content similarity analyzer 410 identifies similarities between users and media content items during the preparation stage. In some embodiments, for each user, the user content similarity analyzer 410 finds a set of most consumed media content items (e.g., finding the K most watched TV programs) and identifies the set of most consumed media content items as similar to the respective user. For example, based on the consumption history from the metadata store 118, the user content similarity analyzer 410 generates a list 415. The exemplary list 415 reflects that user u0 mostly consumes media content items p5, p13, and p2, etc., user u1 mostly consumes media content items p6, p7, and p1, etc., and user u2 mostly consumes media content items p3, p19, and p13, etc. As such, user u0 is similar to media content items p5, p13, and p2, etc., user u1 is similar to media content items p6, p7, and p1, etc., and user u2 is similar to media content items p3, p19, and p13, etc. Accordingly, in some embodiments, the user content similarity analyzer 410 assigns increasing ranking values of 1, 2, and 3 to the media content items p5, p13, and p2 respectively for user u0 with 1 being the highest ranking.

In some embodiments, instead of or in conjunction with generating the list of most consumed media content items 415 for each user, the user content similarity analyzer 410 projects the users onto the consumption patterns space 220 generated by the consumption patterns generator 210 and determines the similarities between users and media content items based on the distance between a respective user and a respective media content item. An exemplary latent vector space, e.g., a consumption patterns vector space 420 with vectors representing users and content is shown in Figure 4. On the consumption patterns vector space 420, twenty dots representing feature vectors associated with twenty media content items are labeled as p0 through p19 and are projected. Further, on the consumption patterns vector space 420, another twenty dots representing feature vectors associated with twenty users are labeled as u0 through u19 and are projected. On the consumption patterns vector space 420, media content item p5, p13, p3, and p2 are closer in distance to u0 than other media content items, representing the possibility that user u0 mostly consumes media content items p5, p13, p3, and p2, e.g., the user content similarity scores between p5 and u0, between p13 and u0, between p3 and u0, and between p2 and u0 are lower than the user content similarity scores between other media content items and u0.

To generate the consumption patterns vector space 420, in some embodiments, the user content similarity analyzer 410 obtains the metadata 118 related to the users, e.g., the consumption history of each user, and refers to the consumption history as a sequence of media content items, where each media content item in the sequence is represented by a vector. The user content similarity analyzer 410 then averages the vectors in the sequence and uses the average as the representation for the user in accordance with some embodiments. In some embodiments, instead of averaging the vectors representing the media content items in the consumption history, the user content similarity analyzer 410 uses other NPL and/or representation learning tools (e.g., doc2vec) for obtaining the vector representation of the users and projecting the users in the consumption patterns vector space 220 along with vectors representing the media content items.

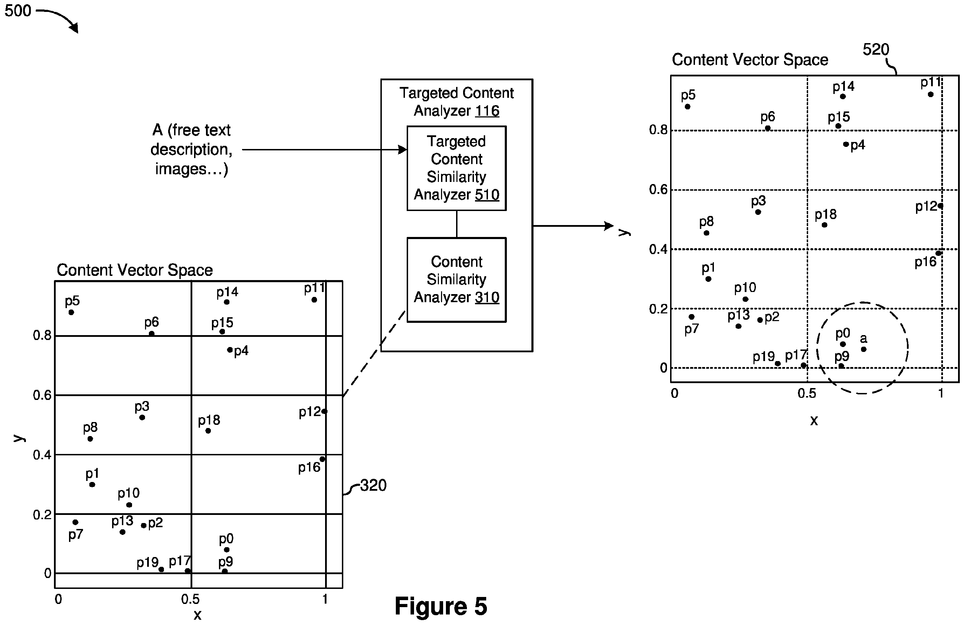

Figure 5 is a diagram 500 illustrating the targeted content analyzer 116 identifying a list of relevant media content items for targeted content in accordance with some embodiments. In some embodiments, the targeted content analyzer 116 includes a targeted content similarity analyzer 510 coupled to the content similarity analyzer 310. During the targeted content processing stage, the targeted content similarity analyzer 510 identifies the similarities between media content items and the targeted content based on free text descriptions of the targeted content item and/or images of the targeted content. The targeted content similarity analyzer 510 then passes the free text and/or image(s) of the targeted content to the content similarity analyzer 310.

Following the processes described above with reference to Figure 3, the content similarity analyzer 310 projects the targeted content item onto the latent vector space 320 based on the characteristics of the targeted content, e.g., the free text description and/or images of advertisements. An exemplary content vector space 520 after projecting the targeted content is shown in Figure 5. By analyzing the content vector space 520, in some embodiments, the targeted content similarity identifier 510 determines the similarities between the targeted content and the media content items based on the distance between the vectors representing the targeted content and the media content items.

For example, in Figure 5, a dot representing a vector associated with an advertisement a is projected onto the content vector space 520. On the content vector space 520, media content item p0 and media content item p9 are within a threshold distance from the targeted content a. As such, based on the content vector space 520, the targeted content similarity analyzer 510 identifies p0 and p9 as the media content items that are similar and/or relevant to the targeted content a, e.g., the content similarity score between p0 and a and the content similarity score between p9 and a are less than a threshold representing the radius of the dash lined circle. Accordingly, the targeted content similarity analyzer 510 outputs a list of media content items including p0 and p9 as relevant media content items for the targeted content a.

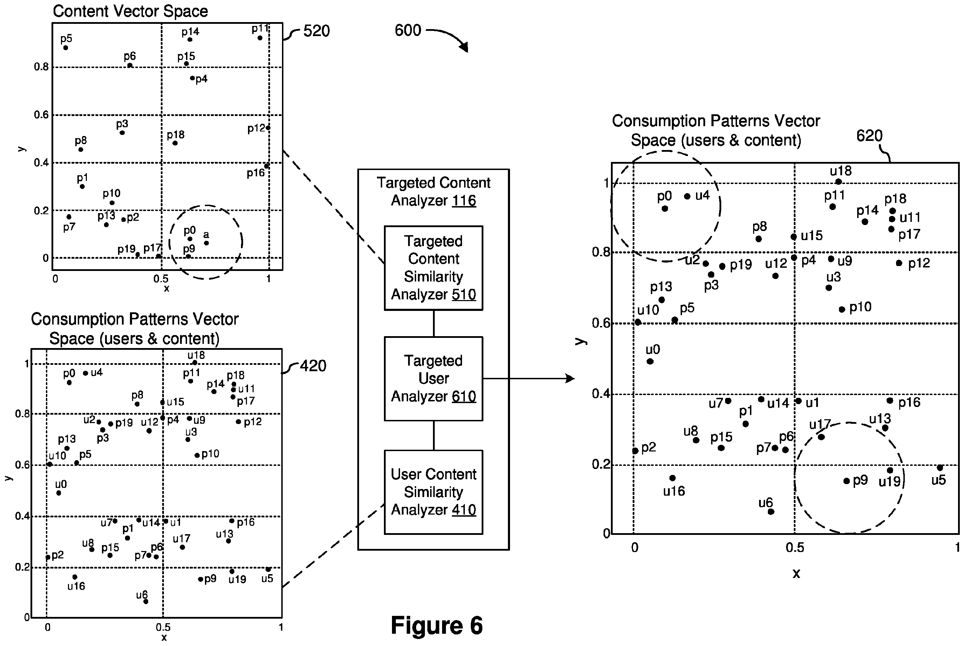

Figure 6 is a diagram 600 illustrating the targeted content analyzer 116 identifying similarities between users and content in accordance with some embodiments. In some embodiments, the targeted content analyzer 116 includes a targeted user analyzer 610 for identifying targeted audiences during the targeted content processing stage. In some embodiments, the targeted user analyzer 610 is coupled to the targeted content similarity analyzer 510 and the user content similarity analyzer 410. For each of the media content items identified by the targeted content similarity identifier 510, the targeted user analyzer 610 locates the top t (e.g., 1000) corresponding users based on the consumption patterns vector space 420 generated by the user content similarity analyzer 410. For example, having identified media content items p0 and p9 as relevant to the targeted content item a on the content vector space 520, the targeted user analyzer 610 analyzes the consumption patterns vector space 420 generated by the user content similarity analyzer 410. In some embodiments, the targeted user analyzer 510 passes parameters (e.g., threshold distance requirements) to the user content similarity analyzer 410 to generate a consumption patterns vector space 620 with vectors u4, u17, and u19 identified. The vector representing user u4 is within a threshold distance from media content item p0, and the vectors representing users u17 and u19 are with a threshold distance from media content item p9. Accordingly, the targeted user analyzer 610 outputs users u4, u17, and u19 in a targeted audience list.

In some embodiments, the threshold distance for different media content items varies depending on the characteristics of the media content items and/or the targeted content characteristics of the targeted media content item, e.g., size, duration, popularity, priority, relevancy to the targeted content item, etc. As such, although Figure 6 shows two circles with the same radius, in some embodiments, the circles have different radii. For example, a first program can have a lower content similarity score than a second program based on the distance of the programs to the targeted content item on the content vector space 520 (Figure 5). Accordingly, the targeted content similarity analyzer 510 determines that the first program is more similar to the targeted content than the second program. As such, the targeted user analyzer 610 can assign a larger threshold distance for the first program than the threshold distance for the second program for identifying respective interested users.

It should be noted that the criteria for identifying relevant media content items and targeted audiences shown in Figures 5 and 6 are merely illustrative. In some embodiments, the threshold distance is dynamic and varying, e.g., determined based on various criteria configurable by the server. For example, based on the characteristics of the targeted content, e.g., duration, relevancy to local events, time of the day, budget, number of purchases, etc., the threshold can be large or small to include more or less relevant media content items and/or targeted audiences for the targeted content.

It should also be noted that in some embodiments, the assignments of the content similarity scores and/or the user content similarity scores vary according to different criteria configurable by the server. For example, in Figure 5, instead of assigning a low content similarity score for two highly similar content items in the content vector space 520, the content similarity analyzer 310 can assign a high content similarity score representing the high correlation between two similar content items. In such embodiments, the criteria for identifying relevant media content items include identifying content items that have content similarity scores higher than a threshold. Similarly, in Figure 6, instead of assigning a low user content similarity score for a user and a content item, the user content similarity analyzer 410 can assign a high user content similarity score representing the high correlation between a user and a content item. In such embodiments, the criteria for identifying relevant targeted audiences include identifying users that have user content similarity scores higher than a threshold.

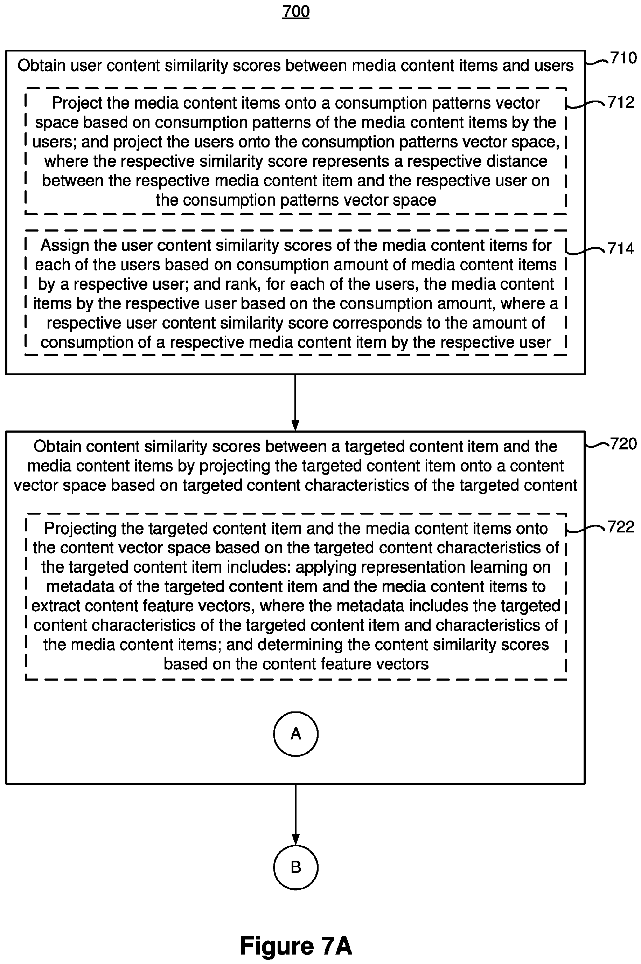

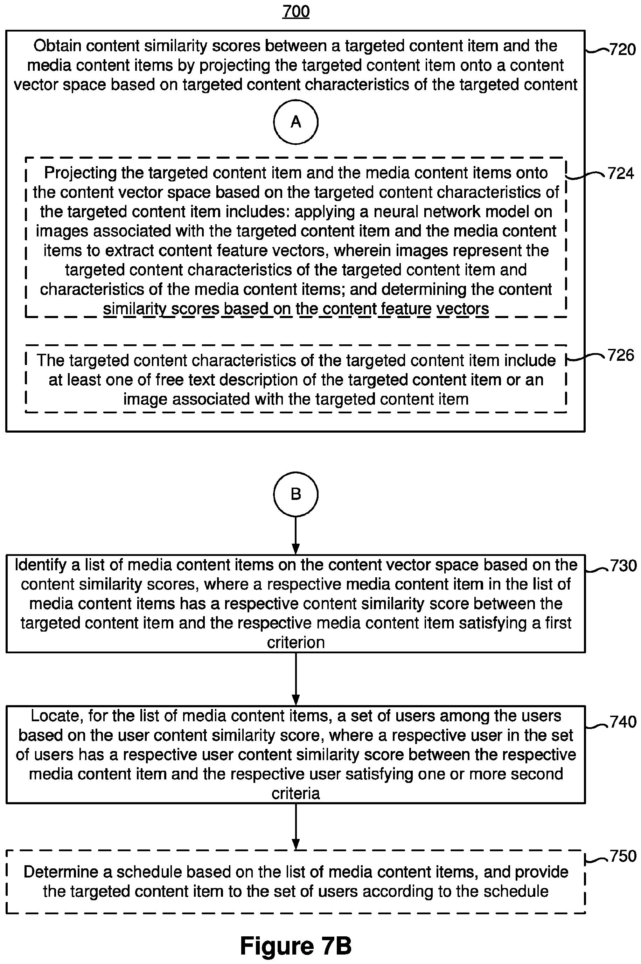

Figures 7A and 7B are flowcharts illustrating a method 700 of dynamic targeted content processing in accordance with some embodiments. In some embodiments, the method 700 is performed at a server, e.g., the server 110 in Figure 1. In some embodiments, the server includes one or more processors (e.g., one or more processors for the encoder and packager 114 and/or the targeted content analyzer 116 in Figure 1) and a non-transitory memory (e.g., a non-transitory memory for storing the content in the content storage 114 and/or the metadata store 118 in Figure 1).

In Figure 7A, the method 700 begins with the server obtaining user content similarity scores between media content items and users, as represented by block 710. In some embodiments, as represented by block 712, obtaining user content similarity scores between media content items and users includes projecting the media content items onto a consumption patterns vector space based on consumption patterns of the media content items by the users, and projecting the users onto the consumption patterns vector space, where the respective similarity score represents a respective distance between the respective media content item and the respective user on the consumption patterns vector space. In some embodiments, as represented by block 714, obtaining user content similarity scores between media content items and users includes assigning the user content similarity scores of the media content items for each of the users based on consumption amount of media content items by a respective user, and ranking, for each of the users, the media content items by the respective user based on the consumption amount, where a respective user content similarity score corresponds to the amount of consumption of a respective media content item by the respective user.

For example, in Figure 4, the user content similarity analyzer 410 obtains the metadata 118 such as the consumption history, e.g., TV programs watched, time watched, purchases made, etc., and derives the list of media content items 415 consumed by the users. The user content similarity analyzer 410 then identifies the similarities between TV programs based on the consumption patterns embedded in the list 415, e.g., more frequently watched media content items are ranked higher in the list for the user, which represents the user is more similar to such frequently watched media content items. Also as shown in Figure 4, in some embodiments, the user content similarity analyzer 410 projects the users onto the consumption patterns vector space 220 to generate the consumption patterns vector space 420. On the consumption patterns vector space 420, vectors representing both the users and the media content items are projected. By analyzing the distance between vectors representing the users and vectors representing the content in the consumption patterns vectors space 420, the user content similarity analyzer 410 determines the similarities between the users and the content. For example, in the exemplary consumption patterns vector space 420, media content item p9 is the closest in distance from user u13, representing a low user content similarity score between media content item p9 and user u13. The low user content similarity score represents the closeness between user u13 and media content item p9, e.g., the consumption pattern of user u13 watching media content item p9 more often than other media content items.

As represented by block 720, the method 700 continues with the server obtaining content similarity scores between a targeted content item and the media content items by projecting the targeted content item onto a content vector space based on targeted content characteristics of the targeted content. In some embodiments, as represented by block 722, projecting the targeted content item and the media content items onto the content vector space based on the targeted content characteristics of the targeted content item includes: (a) applying representation learning on metadata of the targeted content item and the media content items to extract content feature vectors, where the metadata includes the targeted content characteristics of the targeted content item and characteristics of the media content items; and (b) determining the content similarity scores based on the content feature vectors. Turning to Figure 7B, in some embodiments, as represented by block 724, projecting the targeted content item and the media content items onto the content vector space based on the targeted content characteristics of the targeted content item includes: (a) applying a neural network model on images associated with the targeted content item and the media content items to extract content feature vectors, wherein images represent the targeted content characteristics of the targeted content item and characteristics of the media content items; and (b) determining the content similarity scores based on the content feature vectors. In some embodiments, as represented by block 726, the targeted content characteristics of the targeted content item include at least one of free text description of the targeted content item or an image associated with the targeted content item. As such, targeted content such as advertisements can be described using free text and/or images.

For example, in Figure 3, the content similarity analyzer 310 can obtain the metadata 118 of the media content item (e.g., synopsis) and apply representation learning (e.g., Word2Vec) on the synopsis to obtain the content feature vectors. Similarly, in Figure 5, the targeted content similarity analyzer 510 can obtain the metadata of the targeted content item a and pass on to the content similarity analyzer 310 to apply representation learning on the metadata such as the free text description of the targeted content item a to obtain the content feature vector and to project the content feature vector representing the targeted content item a onto the content vector space 520.

In another example, in Figure 3, the content similarity analyzer 310 can obtain images associated with the media content items from the content storage 114 and/or the metadata store 118 (e.g., pictures, trailers, previews, etc.) and apply a neural network (e.g., autoencoder) on the images to obtain the content feature vectors. The content similarity analyzer 310 can then generate the content vector space 320 and project the content feature vectors onto the content vector space 320. Similarly, in Figure 5, the targeted content similarity analyzer 510 can obtain a representative image of the targeted content item a and pass on to the content similarity analyzer 310 to apply the neural network on the image of the targeted content item a to obtain the content feature vector and to project the content feature vector representing the targeted content item a onto the content vector space 520. As shown in Figure 5, in some embodiments, the targeted content similarity analyzer 510 determines the similarities among the media content items based on the distance between the vectors representing the media content items on the content vector space 320. As such, in some embodiments, the content similarity scores correspond to the distance between two media content items, e.g., a lower content similarity score for a and p0 than the content similarity score for a and p2 representing the distance between targeted content item a and media content item p0 is closer than the distance between a and p2 and further representing targeted content item a is more similar to media content item p0 and less similar to media content item p2.

Referring back to Figure 7B, as represented by block 730, the method 700 continues with the server identifying a list of media content items on the content vector space based on the content similarity scores, where a respective media content item in the list of media content items has a respective content similarity score between the targeted content item and the respective media content item satisfying a first criterion. Further, as represented by block 740, the method 700 continues with the server locating, for the list of media content items, a set of users among the users based on the user content similarity score, where a respective user in the set of users has a respective user content similarity score between the respective media content item and the respective user satisfying a second criterion.

For example, in Figure 5, a first criterion is considered as less than the radius of the circle with the center of the circle being the dot labeled as a. The dot represents the vector corresponding to the targeted content item a on the content vector space 520, and the radius of the circle represents a threshold distance from the vector representing the targeted content item a. Because the vectors representing media content items p9 and p0 are within the threshold distance from the targeted content item a, e.g., within the circle, media content items p9 and p0 have content similarity scores less than the threshold, thus satisfying the first criterion. In another example, in Figure 6, the radii of the circles represent two criteria for selecting the targeted audiences for program p0 and program p9, where users such as u4, u17, and u19 with the user content similarity scores to p0 and p9 less than the radii values are considered as satisfying the second criteria. In yet another example, a second criterion can be finding the top t (e.g., 1000) corresponding users shorted by their distances from the selected programs on the consumption patterns vector space 620 (Figure 6). In still another example, based on the list 415, a second criterion can be locating the users that have the highest rankings for the selected programs.

Still referring to Figure 7B, in some embodiments, as represented by block 750, the method 700 further includes determining a schedule based on the list of media content items, and providing the targeted content item to the set of users according to the schedule. For instance, in Figure 1, according to the schedule of the list of relevant TV programs related to an advertisement generated by the targeted content analyzer 116, the player 144 can display the advertisement when playing the list of relevant TV programs to the list of users identified as the targeted audiences. Further, according to the instructions from the server 110, when playing the advertisement to the targeted audience, the splicer 146 can insert the advertisement into the list of relevant TV programs in some embodiments. Alternatively, based on the schedule of the list of relevant TV programs from the server 110, the player 144 can present the advertisement to the targeted audiences even when the users are viewing other TV programs proximate the time that the list of relevant TV programs is played in accordance with some embodiments.

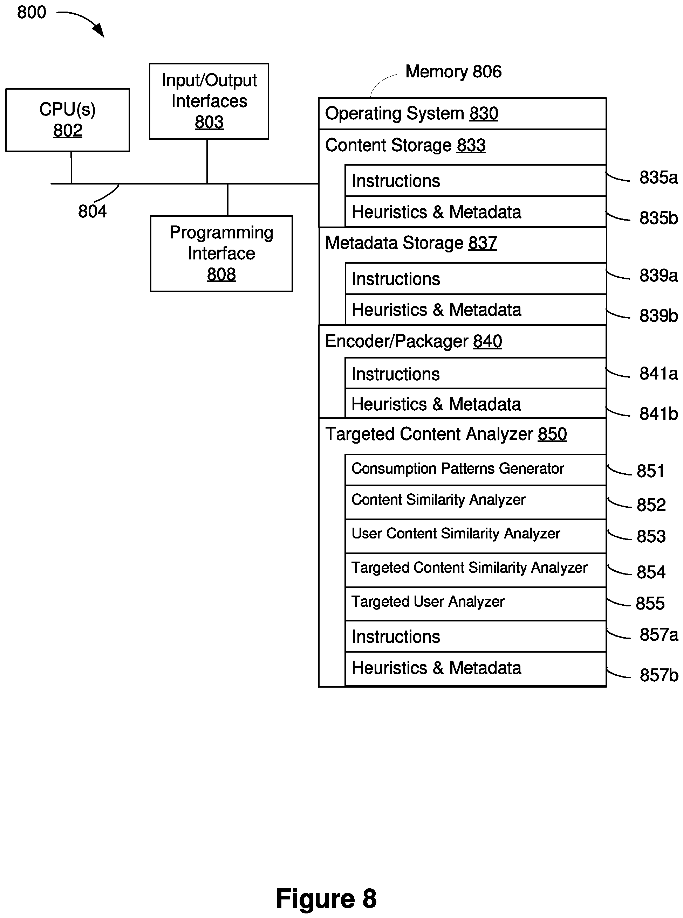

Figure 8 is a block diagram of a computing device 800 for packaging and publishing key pictures in accordance with some embodiments. In some embodiments, the computing device 800 corresponds to the server 110 in Figure 1 and performs one or more of the functionalities described above with respect to the server 110. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 800 includes one or more processing units (CPUs) 802 (e.g., processors), one or more input/output interfaces 803 (e.g., input devices, sensors, a network interface, a display, etc.), a memory 806, a programming interface 808, and one or more communication buses 804 for interconnecting these and various other components.

In some embodiments, the communication buses 804 include circuitry that interconnects and controls communications between system components. The memory 806 includes high-speed random access memory, such as DRAM, SRAM, DDR RAM or other random access solid state memory devices; and, in some embodiments, include non-volatile memory, such as one or more magnetic disk storage devices, optical disk storage devices, flash memory devices, or other non-volatile solid state storage devices. The memory 806 optionally includes one or more storage devices remotely located from the CPU(s) 802. The memory 806 comprises a non-transitory computer readable storage medium. Moreover, in some embodiments, the memory 806 or the non-transitory computer readable storage medium of the memory 806 stores the following programs, modules and data structures, or a subset thereof including an optional operating system 830, a content storage module 833, a metadata storage module 837, an encoder and packager 840, and a targeted content analyzer 850. In some embodiments, one or more instructions are included in a combination of logic and non-transitory memory. The operating system 830 includes procedures for handling various basic system services and for performing hardware dependent tasks.

In some embodiments, the content storage module 833 (e.g., the content storage 114 in Figure 1) stores multimedia content (e.g., targeted content and/or non-targeted content). To that end, the content storage module 833 includes a set of instructions 835a and heuristics and metadata 835b.

In some embodiments, the metadata module 837 (e.g., the metadata storage 118 in Figure 1) stores metadata (e.g., for targeted content and/or non-targeted content). To that end, the content storage module 837 includes a set of instructions 839a and heuristics and metadata 839b.

In some embodiments, the encoder and packager 840 (e.g., the encoder and packager 112 in Figure 1) is configured to encoder the content from the content storage module 833 and package the content for delivery. To that end, the encoder and packager 840 includes a set of instructions 841a and heuristics and metadata 841b.

In some embodiments, the targeted content analyzer 850 (e.g., the targeted content analyzer 116 in Figure 1) is configured to identify targeted content and targeted audiences. In some embodiments, the targeted content analyzer 850 further includes a consumption patterns generator 851 (e.g., the consumption patterns generator 210, Figure 2) for generating a consumption patterns vector space, a content similarity analyzer 852 (e.g., the content similarity analyzer 310, Figure 3) for analyzing content similarities and assigning content similarity scores, a user content similarity analyzer 853 (e.g., the user content similarity analyzer 410, Figure 5) for analyzing the similarities between users and media content items and assigning user content similarity scores, a targeted content similarity analyzer 854 (e.g., the targeted content similarity analyzer 510, Figure 5) for identifying relevant media content items for the targeted content, and a targeted user analyzer 855 (e.g., the targeted user analyzer 610, Figure 6) for identifying the targeted audiences. To that end, the targeted content analyzer 850 includes a set of instructions 857a and heuristics and metadata 857b.

Although the content storage module 833, the metadata storage module 837, the encoder and packager 840, and the targeted content analyzer 850 are illustrated as residing on a single computing device 800, it should be understood that in other embodiments, any combination of the content storage module 833, the metadata storage module 837, the encoder and packager 840, and the targeted content analyzer 850 can reside in separate computing devices in various embodiments. For example, in some embodiments, each of the content storage module 833, the metadata storage module 837, the encoder and packager 840, and the targeted content analyzer 850 resides on a separate computing device.

Moreover, Figure 8 is intended more as functional description of the various features which are present in a particular implementation as opposed to a structural schematic of the embodiments described herein. As recognized by those of ordinary skill in the art, items shown separately could be combined and some items could be separated. For example, some functional modules shown separately in Figure 8 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first device could be termed a second device, and, similarly, a second device could be termed a first device, which changing the meaning of the description, so long as all occurrences of the "first device" are renamed consistently and all occurrences of the "second device" are renamed consistently. The first device and the second device are both devices, but they are not the same device.

The terminology used herein is for the purpose of describing particular embodiments only and is not intended to be limiting of the claims. As used in the description of the embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting", that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a server including one or more processors and a non-transitory memory:
obtaining user content similarity scores between media content items and users;
obtaining content similarity scores between a targeted content item and the media content items by projecting the targeted content item onto a content vector space based on targeted content characteristics of the targeted content item;
identifying a list of media content items on the content vector space based on the content similarity scores, wherein a respective media content item in the list of media content items has a respective content similarity score between the targeted content item and the respective media content item satisfying a first criterion; and
locating, for the list of media content items, a set of users among the users based on the user content similarity score, wherein a respective user in the set of users has a respective user content similarity score between the respective media content item and the respective user satisfying one or more second criteria.

2. The method of claim 1, wherein obtaining the user content similarity scores between the media content items and the users includes:
projecting the media content items onto a consumption patterns vector space based on consumption patterns of the media content items by the users; and
projecting the users onto the consumption patterns vector space, wherein the respective similarity score represents a respective distance between the respective media content item and the respective user on the consumption patterns vector space.

3. The method of claim 1, wherein obtaining the user content similarity scores between the media content items and the users includes:
assigning the user content similarity scores of the media content items for each of the users based on consumption amount of media content items by a respective user; and
ranking, for each of the users, the media content items by the respective user based on the consumption amount, wherein a respective user content similarity score corresponds to the amount of consumption of a respective media content item by the respective user.

4. The method of claim 1, wherein projecting the targeted content item and the media content items onto the content vector space based on the targeted content characteristics of the targeted content item includes:
applying representation learning on metadata of the targeted content item and the media content items to extract content feature vectors, wherein the metadata includes the targeted content characteristics of the targeted content item and characteristics of the media content items; and
determining the content similarity scores based on the content feature vectors.

5. The method of claim 1, wherein projecting the targeted content item and the media content items onto the content vector space based on the targeted content characteristics of the targeted content item includes:
applying a neural network model on images associated with the targeted content item and the media content items to extract content feature vectors, wherein images represent the targeted content characteristics of the targeted content item and characteristics of the media content items; and
determining the content similarity scores based on the content feature vectors.

6. The method of claim 1, wherein the targeted content characteristics of the targeted content item include at least one of free text description of the targeted content item or an image associated with the targeted content item.

7. The method of claim 1, further comprising:
determining a schedule based on the list of media content items; and
providing the targeted content item to the set of users according to the schedule.

8. A device comprising:
one or more processors; and
a non-transitory memory storing computer readable instructions, which when executed by the one or more processors, cause the device to:
obtain user content similarity scores between media content items and users;
obtain content similarity scores between a targeted content item and the media content items by projecting the targeted content item onto a content vector space based on targeted content characteristics of the targeted content item and characteristics of the media content items;
identify a list of media content items on the content vector space based on the content similarity scores, wherein a respective media content item in the list of media content items has a respective content similarity score between the targeted content item and the respective media content item satisfying a first criterion; and
locate, for the list of media content items, a set of users among the users based on the user content similarity score, wherein a respective user in the set of users has a respective user content similarity score between the respective media content item and the respective user satisfying one or more second criteria.

9. The device of claim 8, wherein obtaining the user content similarity scores between the media content items and the users includes:
projecting the media content items onto a consumption patterns vector space based on consumption patterns of the media content items by the users; and
projecting the users onto the consumption patterns vector space, wherein the respective similarity score represents a respective distance between the respective media content item and the respective user on the consumption patterns vector space.

10. The device of claim 8, wherein obtaining the user content similarity scores between the media content items and the users includes:
assigning the user content similarity scores of the media content items for each of the users based on consumption amount of media content items by a respective user; and
ranking, for each of the users, the media content items by the respective user based on the consumption amount, wherein a respective user content similarity score corresponds to the amount of consumption of a respective media content item by the respective user.

11. The device of claim 8, wherein projecting the targeted content item and the media content items onto the content vector space based on the characteristics of the media content item and the characteristics of the media content items includes:
applying representation learning on metadata of the targeted content item and the media content items to extract content feature vectors; and
determining the content similarity scores based on the content feature vectors.

12. The device of claim 8, wherein projecting the targeted content item and the media content items onto the content vector space based on the characteristics of the media content item and the characteristics of the media content items includes:
applying a neural network model on images associated with the targeted content item and the media content items to extract content feature vectors; and
determining the content similarity scores based on the content feature vectors.

13. The device of claim 8, wherein the targeted content characteristics of the targeted content item include at least one of free text description of the targeted content item or an image associated with the targeted content item.

14. The device of claim 8, wherein the computer readable instructions, when executed by the one or more processors, further cause the device to:
determine a schedule based on the list of media content items; and
provide the targeted content item to the set of users according to the schedule.

15. A non-transitory computer-readable medium that includes computer-readable instructions stored thereon that are executed by one or more processors to perform operations comprising:
obtaining user content similarity scores between media content items and users;
obtaining content similarity scores between a targeted content item and the media content items by projecting the targeted content item onto a content vector space based on targeted content characteristics of the targeted content item and characteristics of the media content items;
identifying a list of media content items on the content vector space based on the content similarity scores, wherein a respective media content item in the list of media content items has a respective content similarity score between the targeted content item and the respective media content item satisfying a first criterion;
locating, for the list of media content items, a set of users among the users based on the user content similarity score, wherein a respective user in the set of users has a respective user content similarity score between the respective media content item and the respective user satisfying one or more second criteria; and
optionally a further method step according to any of claims 2 to 7.
